# EUROPEAN PATENT APPLICATION

(11) **EP 1 703 536 A1**
(43) Date of publication of application: **20.09.2006**
(21) Application number: 06100635.9
(22) Date of filing: 20.01.2006
(51) Int. Cl.: H01J 17/16, H04N 5/64

(54) **Display having indirect lighting structure**

(30) Priority: 18.03.2005 KR 2005022548
(71) Applicant: Samsung SDI Co., Ltd., Suwon-si Gyeonggi-do (KR)
(72) Inventor: SHIN, Dong-Hyok c/o Samsung SDI Co., Ltd., Gyeonggi-do (KR)
(74) Representative: Hengelhaupt, Jürgen

(57) **Abstract**

A display that projects light similar to that of an edge of a display panel screen toward the periphery of the display for a comfortable viewing with less eyestrain without requiring additional power consumption and without requiring additional units such as a light emitting unit and a driving unit includes: a display panel adapted to generate visible light to display images, a case adapted to support the display panel and to define a front opening, and a reflection unit arranged on an inner side of the case and adapted to reflect some of the visible light generated by the display panel toward an outside of the case.

## Description

### BACKGROUND OF THE INVENTION

### Field of the Invention

The present invention relates to a display, and more particularly, to a display having an indirect lighting structure to provide indirect lighting around the display for comfortable viewing with less eyestrain.

### Description of the Related Art

A display according to the related art includes a display panel and a case. The display panel displays images, and the case encloses the display panel to protect it and to define a front opening to expose the display panel. Viewers can see images on the display panel by receiving visible light emitted from the display panel through the front opening of the case.

An indirect lighting technology has been developed to provide comfortable viewing to a viewer with less eyestrain. In the indirect lighting technology, visible light emitted from an edge of a display panel screen is detected to project the same or similar visible light toward the periphery of the display. That is, the hue of the visible light emitted from the edge of the display panel screen is automatically detected and visible light with the same or similar hue is projected from the display toward the right and left side of the display.

For example, blue light can be laterally projected when a seaside picture or a sky picture is displayed on the display panel screen, yellow light can be laterally projected when a landscape with yellow leaves is displayed on the display panel screen, and red light can be laterally projected when an erupting volcano is displayed on the display panel screen.

It is known that eyestrain of the viewer caused by actions of the iris can be reduced by illuminating the periphery of the display. That is, soft light around the display panel decreases the light intensity change from the periphery to the display panel screen and thereby reduces the movements of the iris and provides more comfortable viewing.

For this purpose, the display of the related art requires an additional indirect lighting unit that protrudes from each side of the display. The indirect unit includes a light emitting unit and a driving unit for driving the light emitting unit. The light emitting unit is capable of emitting red, green, and blue light. The driving unit determines the brightness and saturation of the light to be emitted from the light emitting unit and then sends a corresponding control signal to the light emitting unit. That is, the driving unit detects the brightness and saturation of light emitted from the edge of the display panel screen, determines the brightness and saturation of the light to be emitted from the light emitting unit according to the detected values, and sends a corresponding control signal to the light emitting unit.

However, to provide the indirect lighting, the display must be equipped with additional units such as the light emitting unit and the driving unit. Furthermore, since the driving unit must be operated in association with a main driving unit of the display, it difficult to design and fabricate the display with the driving unit. Still furthermore, the additional light emitting unit increases the power consumption of the display.

### SUMMARY OF THE INVENTION

The present invention provides a display that projects light similar to that of an edge of a display panel screen toward the periphery of the display for comfortable viewing with less eyestrain without requiring additional power consumption and without requiring additional units such as a light emitting unit and a driving unit.

According to an aspect of the present invention, a display is provided including: a display panel adapted to generate visible light to display images; a case adapted to support the display panel and to define a front opening; and a reflection unit arranged on an inner side of the case and adapted to reflect some of the visible light generated by the display panel toward an outside of the case.

The case can define an illumination opening adapted to pass the visible light reflected by the reflection unit therethrough.

The reflection unit can be arranged on each of four inner sides of the case.

The reflection unit can include at least one reflector.

The display panel can be a Plasma Display Panel (PDP).

### BRIEF DESCRIPTION OF THE DRAWINGS

A more complete appreciation of the present invention, and many of the attendant advantages thereof, will be readily apparent as the present invention becomes better understood by reference to the following detailed description when considered in conjunction with the accompanying drawings in which like reference symbols indicate the same or similar components, wherein:

FIG. 1 is a front view of a display according to the related art;

FIG. 2 is a front view of a display according to an embodiment of the present invention; and

FIG. 3 is a sectional view taken along line III-III' of FIG. 2, showing an inside structure of the display.

### DETAILED DESCRIPTION OF THE INVENTION

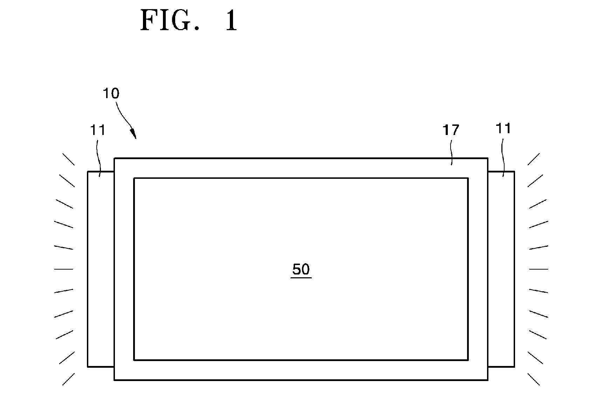

FIG. 1 is a front view of a display according to the related art.

Referring to FIG. 1, a display 10 includes a display panel 50 and a case 17. The display panel 50 displays images, and the case 17 encloses the display panel 50 to protect it and to define a front opening to expose the display panel 50. Viewers can see images on the display panel 50 by receiving visible light emitted from the display panel 50 through the front opening of the case 17.

The display of the related art requires an additional indirect lighting unit 11 that protrudes from each side of the display 10. The indirect unit 11 includes a light emitting unit and a driving unit for driving the light emitting unit. The light emitting unit is capable of emitting red, green, and blue light. The driving unit determines the brightness and saturation of the light to be emitted from the light emitting unit and then sends a corresponding control signal to the light emitting unit. That is, the driving unit detects the brightness and saturation of light emitted from the edge of the display panel screen, determines the brightness and saturation of the light to be emitted from the light emitting unit according to the detected values, and sends a corresponding control signal to the light emitting unit.

The present invention will now be described more fully with reference to the accompanying drawings, in which an exemplary embodiment of the present invention is shown. Like reference numerals in the drawings denote like elements.

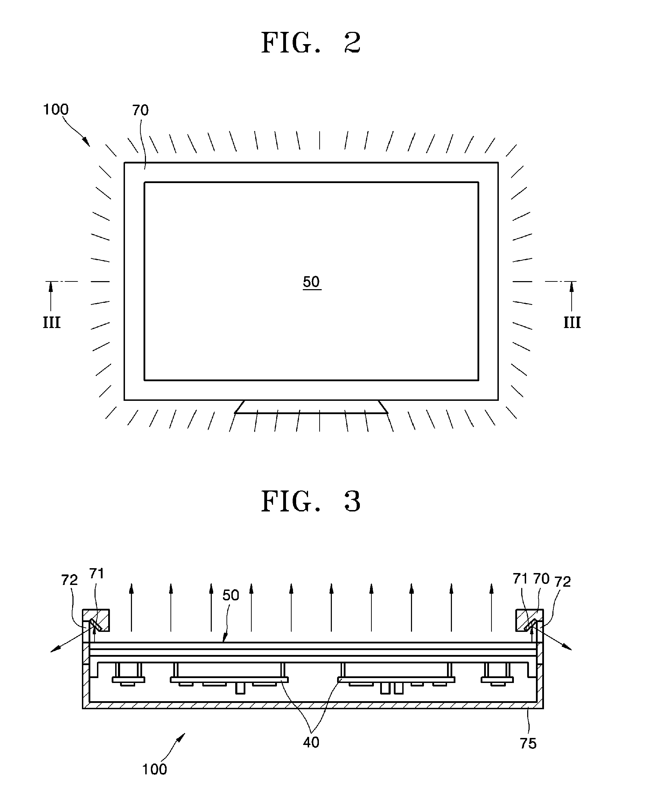

FIG. 2 is a front view of a display according to an embodiment of the present invention, and FIG. 3 is a sectional view taken along line III-III' of FIG. 2.

Referring to FIGs. 1 and 2, a display 100 includes a display module, a front case 70, and a rear case 75.

The display module includes a display panel 50, driver circuits 40 to drive the display panel 50, and a chassis to support the display panel 50 and the driver circuits 40. The display panel 50 may be a thin, high-quality Plasma Display Panel (PDP).

The front case 70 is disposed on a front of the display module and includes a front opening to pass light emitted from the display module therethrough and a bezel portion to cover an edge of a screen of the display panel 50. A reflection unit 71 is installed on an inner side of the bezel portion of the front case 70, and an illumination opening 72 is defined on a side of the front case 70, for indirect lighting. Light emitted from the edge of the display panel 50 covered by the bezel portion of the front case 70 is reflected by the reflection unit 71 toward the periphery of the display 100 through the illumination opening 72. The reflection unit 71 can be a mirror.

The rear case 75 and the front case 70 enclose the display module to protect it. The rear case 75 can define slots (not shown) to rapidly dissipate heat generated by the display panel 50 and the driver circuit 40 to the outside.

The light emitted from the edge of the display panel screen is reflected to the periphery of the display in a lateral direction, such that eyestrain caused by the actions of the iris can be reduced. That is, the laterally reflected light provides a soft indirect lighting around the display to decrease the light intensity change between the display panel screen and the periphery of the display, such that the actions of the iris can be reduced and the viewer can view images on the display panel more comfortably.

Though a single reflector is used for the reflection unit 71 of FIG. 2, another reflector(s) can be used for the reflection unit to adjust the orientation of the reflecting light.

The reflection unit and the illumination opening can be formed on each of the four edges of the display to provide the indirect lighting all around the display. Also, the present invention can be applied to other displays having a non-rectangular shape.

Though the indirect lighting unit 11 (FIG. 1) of the related art, which is not directly associated with the image displaying function, protrudes from the display to increase the size of the display, the present invention does not require such a protruding unit and thereby does not increases the size of the display.

According to another embodiment of the present invention, light emitting cells can be installed on the edge of the display panel screen, and image signals for the edge of the display panel screen can be also sent to the light emitting cells to emit the same light as the edge of the display panel. By reflecting the light emitted from the light emitting cells toward the periphery of the display with the reflection unit, indirect lighting can be attain to provide comfortable viewing with less eyestrain. In this embodiment, since the display panel is not covered by the bezel of the front cover, the display panel can show the whole image without any cut-off at the edge.

As described above, the indirect lighting is provided around the periphery of the display to moderate the light emitted from the display panel screen, such that the viewer can reduce his/her iris movements and view images on the display panel more comfortably.

Furthermore, since the light emitted from the edge of the display panel is reflected by the reflection unit to provide the indirect lighting, an additional light emitting unit is not required. Also, an additional driving unit is not required to detect the light emitted from the edge of the display panel to send a corresponding control signal to the additional light emitting unit. Therefore, comfortable viewing can be provided without increasing the power consumption.

## Claims

1. A display, comprising:
a display panel adapted to generate visible light to display images;
a case adapted to support the display panel and to define a front opening; and
a reflection unit arranged on an inner side of the case and adapted to reflect some of the visible light generated by the display panel toward an outside of the case.

2. The display of claim 1, wherein the case defines an illumination opening adapted to pass the visible light reflected by the reflection unit therethrough.

3. The display of claim 1, wherein the reflection unit is arranged on each of four inner sides of the case.

4. The display of claim 1, wherein the reflection unit includes at least one reflector.

5. The display of claim 1, further comprising light emitting cells arranged around a screen of the display panel and adapted to receive the same signal as an edge of the screen and to generate the same visible light as that generated by the edge of the screen.

6. The display of claim 1, wherein the display panel comprises a Plasma Display Panel (PDP).
